# EUROPEAN PATENT SPECIFICATION

(11) **EP 2 425 133 B1**
(45) Date of publication and mention of the grant of the patent: **09.05.2018**
(21) Application number: 10770020.5
(22) Date of filing: 25.03.2010
(51) Int. Cl.: F03D 9/25, H02K 7/18, F03D 80/70

(54) **WIND-POWER UNIT HAVING A VERTICAL TURBINE SHAFT**
WINDKRAFTANLAGE MIT VERTIKALER TURBINENWELLE
UNITÉ ÉOLIENNE AYANT UN ARBRE DE TURBINE VERTICAL

(30) Priority: 27.04.2009 SE 0950280
(43) Date of publication of application: 07.03.2012
(73) Proprietor: Vertical Wind Ab, 754 50 Uppsala (SE)
(72) Inventor: BERNHOFF, Hans, S-756 46 Uppsala (SE)
(74) Representative: Groth & Co. KB
(86) International application number: PCT/SE2010/050331
(87) International publication number: WO 2010/126428

(56) References cited:
- WO-A1-96/30647
- JP-U- H02 144 673
- US-A1- 2007 189 889

## Description

### Background of the Invention

The present invention relates to a wind-power unit having a vertical turbine shaft that is radially mounted in bearings to a supporting pole.

The invention also concerns an electric energy-consuming device, an electric mains as well as a use of the wind-power unit.

### Background of the Invention

Wind-power units with vertical shaft have increasingly developed to become a competitive alternative to wind-power units with horizontal shaft and have several advantages in relation to the same. There are different types of wind-power units with vertical shaft, among others, units with a so-called H-rotor where the turbine blades are vertical. The present invention is primarily intended for H-rotor units but can also be applied to other kinds of wind-power units with vertical shaft.

For an efficient utilization of the winds, the turbine of the wind-power unit should be situated as high as possible. The turbine shaft is then connected with a generator arranged on the ground and having a unit shaft that by the upper end thereof is attached to the turbine shaft and by the lower end thereof is attached to the rotor of the generator. Alternatively, the generator may be directly arranged up at the turbine shaft.

Normally, the diameter of the turbine shaft will be relatively large, often in the order of 50-200 cm, since often wind turbines of large dimensions are concerned. In certain special applications, it may for other reasons be expedient with a large diameter of the turbine shaft. A stable bearing mounting of the turbine shaft is required, and in the size range indicated, this involves a problem. Conventional bearings become very expensive. As they moreover are arranged at a high height, it becomes complicated to repair a bearing failure or other defects in the bearing mounting.

The object of the present invention is to overcome this problem and accordingly provide support to the turbine shaft in the radial direction wherein the indicated drawbacks are obviated or at least reduced.

WO 96/30647 discloses a support structure for a vertical axis wind turbine comprising a spinning tower supported for rotation about a fixed post by means of bearing wheels journaled by arms to the spinning tower, wherein the bearing wheels bear against the circumferential surface of the fixed post.

### Summary of the Invention

The object set forth is achieved by the invention by the fact that a wind-power unit of the kind mentioned by way of introduction has the special features that the bearing mounting comprises at least one supporting device comprising at least three supporting components distributed in the circumferential direction with spacings between the supporting components in the circumferential direction, the total extension of which spacings in the circumferential direction exceeds half the circumference, and which supporting components abut against the turbine shaft and are connected with the supporting pole.

The supporting devices replace the need of conventional bearings for the bearing mounting of the turbine shaft and eliminate thereby the problems associated with the same at the large dimensions that often are the case in this context.

The supporting devices become considerably more inexpensive than conventional bearings. This constitutes a significant contribution to enhance the economical competitiveness of this kind of wind-power units. The invention also entails an improved operating economy in comparison with if conventional bearings would have been used, thanks to service and repair of possible defects being facilitated. The device for bearing mounting according to the invention has in addition a relatively low weight.

Suitably, the number of supporting components is 3-7. Suitably, the total extension in the circumferential direction of the spacings is 1/2-3/4 of the circumference.

According to a preferred embodiment, each supporting component comprises at least one roller body arranged to abut against the turbine shaft.

This entails low friction and little wear. Suitably, the roller body consists of a wheel.

According to an additional preferred embodiment, each supporting component comprises two wheels arranged on a carrying element, which carrying element is turnable around a vertical shaft between the two wheel shafts.

Such a boogie-like supporting component provides a good centring of the turbine shaft between the supporting components and contributes to the fact that the supporting device gets a desired flexibility that allows a certain motion laterally of the turbine shaft without the bearing-mounting stability becoming impaired.

According to an additional preferred embodiment, each supporting component is resiliently pressed against the turbine shaft.

This contributes further to the desirable flexibility and reduces the risk of the building up of large bending stresses in the turbine shaft. The resilient suspension means therefore also lower requirements of precision in the mounting of the turbine.

According to an additional preferred embodiment, a leaf spring is arranged between the supporting components and the supporting pole.

By this arrangement, the resilient pressing is achieved in a simple, reliable and expedient way.

According to an additional preferred embodiment, a cup spring is arranged between the supporting component and the supporting pole.

A cup spring is another suitable alternative of the springing that in a simple way guarantees a suitable degree of springing. The cup spring may also be complementary to the leaf spring.

According to an additional preferred embodiment, each roller body has a rolling surface of a material that is softer than the rest of the roller body.

With a relatively soft material in the rolling path, the risk of the roller body only abutting against the shaft in certain points decreases. Suitably, the soft material is a plastic such as, e.g., polyurethane and the rest of the roller body may be of metal.

According to an additional preferred embodiment, the bearing mounting comprises two axially separated supporting devices.

Thereby, the stability and precision of the bearing mounting increase, particularly when the turbine shaft is long. When the turbine shaft by the lower end thereof is connected to a unit shaft, the design with two supporting devices entails decreased lateral forces on the joint that connects the turbine shaft with the unit shaft.

According to an additional preferred embodiment, at least one of the supporting devices is arranged to be able to carry the axial force.

Thereby, also the need of providing the axial bearing mounting with conventional bearings is eliminated, which further contributes to the advantages that have been mentioned above regarding the general design of the invention.

According to an additional preferred embodiment, the supporting pole has radially inwardly facing support surfaces with which each supporting device is connected, and the wind-power unit comprising a generator arranged at the lower end of the supporting pole and a unit shaft that rotationally fixedly connects the turbine shaft with the generator.

The supporting device in accordance with the invention is particularly advantageous to use in such a type of wind-power units. In such ones, the unit shaft is normally arranged inside the supporting pole, and therefore it is structurally suitable that also the turbine shaft extends into the mast, and is, in this way, thereby supported from outside from the supporting pole.

According to an additional preferred embodiment, the supporting pole has radially outwardly facing support surfaces with which each supporting device is connected, the turbine shaft is hollow, and each supporting device abuts against the inside of the turbine shaft.

This is an alternative embodiment to the one mentioned next above and entails the advantage that the turbine shaft can get bearing support along a comparatively great part of its length. This embodiment is particularly suitable in such applications where the rotary motion is not transferred to a generator arranged at the ground, but is also applicable in such a context.

According to an additional preferred embodiment, a generator is arranged inside the turbine shaft with the rotor attached to the inside of the turbine shaft and the stator attached to the supporting shaft.

This embodiment is particularly suitable in contexts where the generated electric energy is consumed by electric devices adjacent to the supporting pole, for example when a telecommunications mast is concerned.

The invention also concerns an energy-consuming device carried by a supporting pole, the supporting pole constituting the supporting pole of a wind-power unit according to the embodiment described next above of the invented wind-power unit and the wind-power unit being arranged to deliver energy to the electric energy-consuming device.

Thereby, the advantages of the invention are utilized in an application of particular interest.

An electric mains according to the invention has the special feature that it is connected to a wind-power unit according to the present invention, particularly according to anyone of the preferred embodiments of the same.

Finally the invention concerns a use of the invented wind-power unit, particularly according to anyone of the preferred embodiments of the same, for delivering energy to an electric mains.

The invented electric mains and the invented use provide advantages of the corresponding kind as the invented wind-power unit, particularly according to anyone of the preferred embodiments of the same and that have been accounted for above.

The invention is explained in more detail by the subsequent detailed description of embodiment examples of the same, reference being made to the appended figures.

### Brief Description of the Figures

Fig. 1 is a schematic side view of a wind-power unit according to a first embodiment example of the invention.
Fig. 2 is a longitudinal section through a detail in Fig. 1.
Fig. 3 is a section along the line III-III in Fig. 1.
Fig. 4 is a longitudinal section through a detail in a second embodiment example.
Fig. 5 is a longitudinal section through a detail in a third embodiment example.
Fig. 6 is a section along the line VI-VI in Fig. 5.
Fig. 7 is a detailed enlargement of Fig. 6.
Fig. 8 is a longitudinal section of a detail in a fourth embodiment example.

### Description of Embodiment Examples

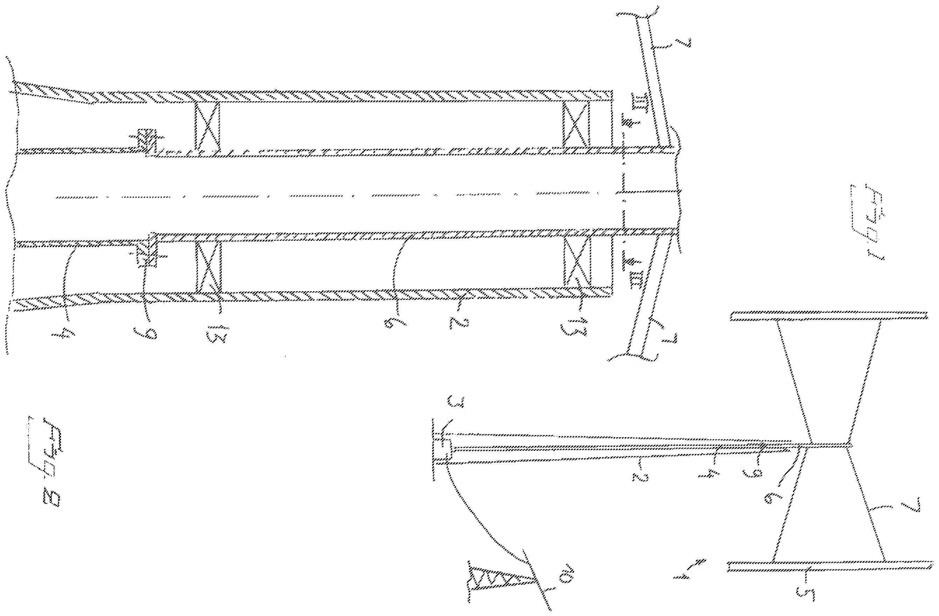

Fig. 1 illustrates schematically a wind-power unit according to the invention with vertical shaft. The unit has a turbine 1 of the H-rotor type where a number of vertical turbine blades 5, for instance three, are connected to the turbine shaft 6 via stays 7. The turbine shaft 6 is connected to the shaft 4 of the unit by means of a rotationally fixed joint 9. The unit shaft 4 is at its lower end connected to the rotor of a generator 3. A supporting pole 2 surrounds the shaft 4.

In the example shown, the supporting pole 2 is slightly conical. However, it may have another design, for example cylindrical, or conical over the greater part of its lower extension and cylindrical at the top. The supporting column may have an entirely surrounding wall or be made as a framework construction, and its cross-sectional shape may alternatively be a polygon.

The unit shaft 4 is connected to the turbine shaft 6 by means of a rotationally fixed joint 9. The unit shaft 4 as well as the turbine shaft 6 is mounted in bearings in the supporting pole 2, and suitably both are formed as tubes, i.e., hollow. The generator 3 of the unit delivers energy to an electric mains 10.

Fig. 2 illustrates the upper part of the supporting pole 2 and the part of the turbine shaft 6 that is situated inside the same. In this embodiment example, the upper part of the supporting pole 2 is cylindrical.

The turbine shaft 6 is radially mounted in bearings in the supporting pole 2 by means of two axially separated supporting devices 13. The turbine shaft 6 may also be axially mounted in bearings in the supporting pole 2 or its weight may be carried via the joint 9 with the unit shaft 4 by the axial bearing mounting of the unit shaft in the supporting pole 2.

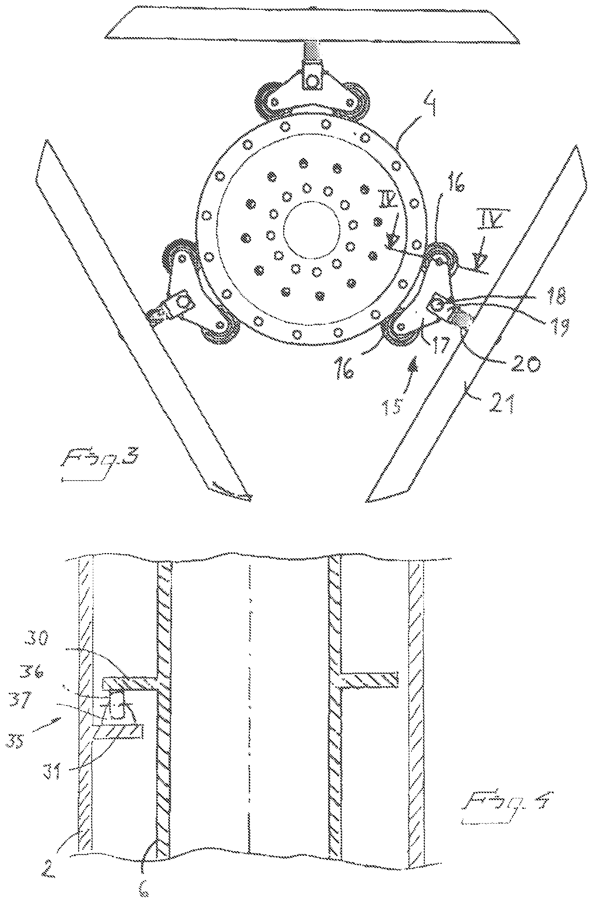

The supporting device 13 is illustrated in more detail in Fig. 3 that is an enlarged section along the line III-III in Fig. 2.

The shown supporting device consists of three supporting components 15 uniformly distributed in the circumferential direction around the turbine shaft 6. Each supporting component 15 has two roller bodies 16 formed as wheels and that abut against the turbine shaft 6. The wheels 16 are mounted on a carrying element 17. The carrying element 17 is turnable around a suspension shaft 18 in a holder 19 that via a leaf spring 20 is attached to a supporting beam 21. The leaf spring 20 presses the supporting component 15 by a certain bias force against the turbine shaft 6, suitably in the order of 1 kN. The supporting beam 20 is anchored in the supporting pole 2. The supporting beam 21 may be formed with a thin cross-sectional dimension so that a certain spring action is achieved, the same functioning as a cup spring.

If the turbine shaft 6 also is axially mounted in bearings directly in the supporting pole 2, it is suitably made using a supporting device of the corresponding kind, but adapted to the axial force. An example of the application of the supporting device upon the carrying of axial force is illustrated in Fig. 4. For this purpose, the turbine shaft 6 is provided with a radial flange 30. On the inside of the supporting pole 2, three radially inwardly directed projections 31 are arranged uniformly distributed in the circumferential direction. On each projection, a supporting component 35 is mounted. Said supporting components 35 may be formed in a simpler way than the corresponding supporting components 15 of the supporting device 33 shown in Fig. 3 for the radial bearing mounting. Accordingly, each supporting component consists of a simple yoke-shaped carrying element 37 attached to the respective projection 31 and that rotatably carries a wheel 36 in the carrying element 37 having an axially directed rotation axis.

For the axial load, the supporting components, as well as those for the radial bearing mounting, may be resiliently formed with a spring action in the axial direction and also be provided with wheels boogie-mounted in pairs. However, the need therefor is smaller for the axial bearing mounting than for the radial bearing mounting.

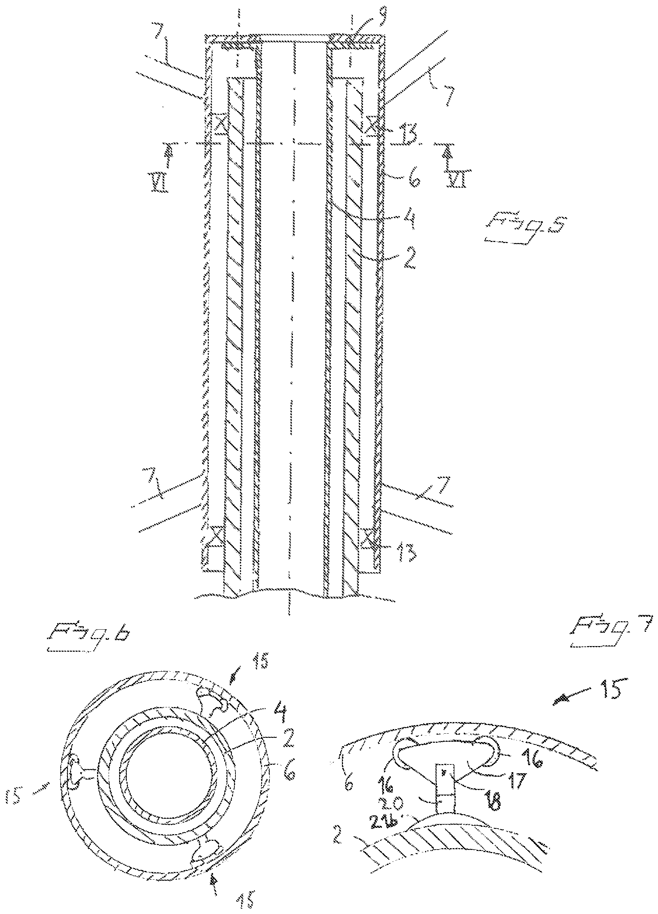

Fig. 5 illustrates an alternative embodiment example, in which the turbine shaft 6 is mounted in bearings on the outside of the supporting pole 2. The joint 9 between the turbine shaft 6 and the unit shaft 4 situated inside the supporting pole is arranged above the supporting pole 2. Also in this example, there are two axially separated supporting devices 13, each of which provided with three supporting components.

How the supporting components are arranged is seen in Figs. 6 and 7, where Fig. 6 is a section along the line VI-VI in Fig. 5. The supporting components 15, in this example three in number, are uniformly distributed in the circumferential direction. Each supporting component 15 rollingly abuts against the inside of the turbine shaft 6 and gets support by the outside of the supporting pole 2.

Fig. 7 is a detailed view of an individual supporting component 15. As in the embodiment according to Fig. 3, it is provided with two roller bodies 16 formed as wheels, which abut against the outside of the turbine shaft 6. The wheels 16 are correspondingly mounted to a carrying element 17 turnable around a shaft 18. Via a leaf spring 20 and a cup spring 21b, the supporting component 15 is attached to the outside of the supporting pole 2.

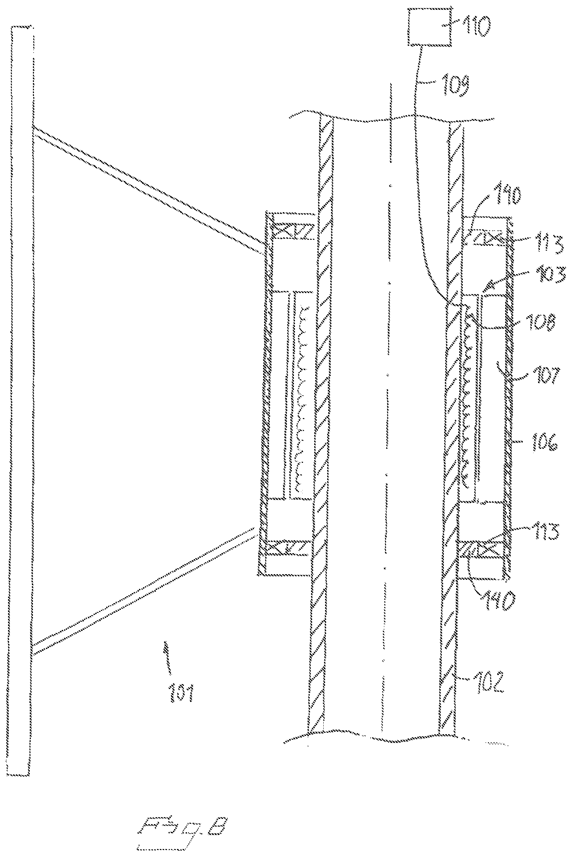

Fig. 8 illustrates a telecommunications mast 102 that is provided with equipment and devices 110 that consume electric energy. A wind turbine 101 with vertical shaft is mounted to the outside of the telecommunications mast 102, and accordingly the telecommunications mast also serves as a supporting pole for the wind turbine 101.

Also here, the turbine shaft 106 is mounted in bearings on the outside of the supporting pole 102 by means of the supporting devices 113 in a similar way as in the example shown in Figs. 5-7.

The generator 103 is arranged inside the turbine shaft 106 with the rotor 107 attached to the inside of the turbine shaft 106 and the stator 108 on the outside of the supporting pole 102. Via a line 109, the stator winding is connected to the electric energy-consuming devices 110.

The presence of the generator 103 between the turbine shaft 106 and the supporting pole 102 makes the spacing between the same larger than in the embodiment example shown in Figs. 5-7. In this case, it may therefore be suitable to provide the supporting pole 102 with one flange 140 for each supporting device 113, to which the supporting components thereof are attached. Alternatively, the leaf spring 20 in the embodiment example illustrated in Fig. 7 may be made longer and stiffer.

## Claims

1. Wind-power unit having a vertical turbine shaft (6, 106) that is radially mounted in bearings to a supporting pole (2, 102), which bearing mounting comprises at least one supporting device (13, 113) each of which comprising at least three supporting components (15) distributed in the circumferential direction with spacings between the supporting components (15) in the circumferential direction, the total extension of which spacings in the circumferential direction exceeds half the circumference, and which supporting components (15) abut against the turbine shaft (6,106) and are connected with the supporting pole (2, 102), **characterized in that** each supporting component (15) comprises two roller bodies (16) arranged on a carrying element (17), which carrying element is turnable around a vertical shaft (18) between the two roller bodies (16).

2. Wind-power unit according to claim 1, **characterized in that** each supporting component (15) comprises at least one roller body (16) arranged to abut against the turbine shaft (6, 106).

3. Wind-power unit according to claim 1 or 2, **characterized in that** each supporting component (15) is resiliently pressed against the turbine shaft (6, 106).

4. Wind-power unit according to claim 3, **characterized in that** a leaf spring (20) is arranged between the supporting component (15) and the carrying pole (2, 102).

5. Wind-power unit according to claim 3 or 4, **characterized in that** a cup spring (21, 21b) is arranged between the supporting components (15) and the carrying pole (2, 102).

6. Wind-power unit according to anyone of claims 2-4, **characterized in that** each roller body (16) has a rolling surface of a material that is softer than the rest of the roller body (16).

7. Wind-power unit according to any one of claims 1-6, **characterized in that** the bearing mounting comprises two axially separated supporting devices (13, 113).

8. Wind-power unit according to any one of claims 1-7, **characterized in that** at least one of the supporting devices (13, 113) is arranged to be able to carry axial forces.

9. Wind-power unit according to any one of claims 1-8, **characterized in that** the supporting pole (2) has radially inwardly facing support surfaces with which each supporting device (13) is connected, and which wind-power unit comprises a generator (3) arranged at the lower end of the supporting pole (2) and a unit shaft (4) that rotationally fixedly connects the turbine shaft (6) with the generator (3).

10. Wind-power unit according to any one of claims 1-8, **characterized in that** the supporting pole (2, 102) has radially outwardly facing support surfaces with which each supporting device (13, 113) is connected, that the turbine shaft is hollow, and that each supporting device (13, 113) abuts against the inside of the turbine shaft (6, 106).

11. Wind-power unit according to claim 10, **characterized in that** a generator (103) is arranged inside the turbine shaft (106) with the rotor (107) attached to the inside of the turbine shaft (106) and the stator (108) attached to the supporting pole (102).

12. Electric energy-consuming device (110) carried by a supporting pole (102) **characterized in that** the supporting pole (102) constitutes the supporting pole of a wind-power unit according to claim 11, and that the wind-power unit is arranged to deliver energy to the electric energy-consuming device (110).

13. Electric mains, **characterized in that** the mains is connected to a wind power unit according to any one of claims 1-9.

14. Use of a wind-power unit according to any one of claims 1-9 for delivering energy to an electric mains.

## Patentansprüche

1. Windkraftanlage, die eine vertikal in Lagern gelagerte vertikale Turbinenwelle (6, 106) an einem Tragmast (2, 102), der mindestens eine Tragvorrichtung (13, 113) aufweist, die jeweils aufweist mindestens drei in Umfangsrichtung verteilte Stützbauteile (15) mit Abständen zwischen den Stützbauteilen (15) in der Umfangsrichtung aufweist, wobei die Gesamterstreckung der Abstände in Umfangsrichtung den halben Umfang übersteigt, und wobei die Stützbauteile (15) an der Turbinenwelle (6, 106) anliegen und mit dem Tragmast (2, 102) verbunden sind, **dadurch gekennzeichnet, dass** jedes Stützbauteil (15) zwei an einem Tragelement (17) angeordnete Rollenkörper (16) aufweist, wobei das Tragelement um eine vertikale Welle (18) zwischen den beiden Rollenkörpern (16) drehbar ist.

2. Windkraftanlage nach Anspruch 1, **dadurch gekennzeichnet, dass** jedes Stützbauteil (15) wenigstens einen Rollenkörper (16) aufweist, der zum Anliegen an der Turbinenwelle (6, 106) angeordnet ist.

3. Windkraftanlage nach Anspruch 1 oder 2, **dadurch gekennzeichnet, dass** jedes Stützbauteil (15) federnd gegen die Turbinenwelle (6, 106) gedrückt ist.

4. Windkraftanlage nach Anspruch 3, **dadurch gekennzeichnet, dass** zwischen dem Stützbauteil (15) und dem Tragmast (2, 102) eine Blattfeder (20) angeordnet ist.

5. Windkraftanlage nach Anspruch 3 oder 4, **dadurch gekennzeichnet, dass** zwischen den Stützbauteilen (15) und dem Tragmast (2, 102) eine Tellerfeder (21, 21b) angeordnet ist.

6. Windkraftanlage nach einem der Ansprüche 2-4, **dadurch gekennzeichnet, dass** jeder Rollenkörper (16) eine Abrollfläche aus einem Material aufweist, das weicher ist als der übrige Rollenkörper (16).

7. Windkraftanlage nach einem der Ansprüche 1 bis 6, **dadurch gekennzeichnet, dass** die Lagerhalterung zwei axial getrennte Stützvorrichtungen (13, 113) aufweist.

8. Windkraftanlage nach einem der Ansprüche 1 bis 7, **dadurch gekennzeichnet, dass** mindestens eine der Stützvorrichtungen (13, 113) angeordnet ist, um axiale Kräfte aufnehmen zu können.

9. Windkraftanlage nach einem der Ansprüche 1 bis 8, **dadurch gekennzeichnet, dass** der Tragmast (2) radial nach innen weisende Auflageflächen aufweist, mit denen jede Stützvorrichtung (13) verbunden ist, und wobei die Windkraftanlage einen Generator (3), der am unteren Ende des Tragmastes (2) angeordnet ist, und eine Aggregatewelle (4) aufweist, welche die Turbinenwelle (6) drehfest mit dem Generator (3) verbindet.

10. Windkraftanlage nach einem der Ansprüche 1 bis 8, **dadurch gekennzeichnet, dass** der Tragmast (2, 102) radial nach außen weisende Auflageflächen aufweist, mit denen jede Stützvorrichtung (13, 113) verbunden ist, dass die Turbinenwelle hohl ist und dass jede Stützvorrichtung (13, 113) an der Innenseite der Turbinenwelle (6, 106) anliegt.

11. Windkraftanlage nach Anspruch 10, **dadurch gekennzeichnet, dass** ein Generator (103) innerhalb der Turbinenwelle (106) angeordnet ist, wobei der Rotor (107) an der Innenseite der Turbinenwelle (106) befestigt ist und der Stator (108) an dem Tragmast (102) befestigt ist.

12. Elektrische Energie verbrauchende Vorrichtung (110), die von einem Tragmast (102) getragen wird, **dadurch gekennzeichnet, dass** der Tragmast (102) den Tragmast einer Windkraftanlage nach Anspruch 11 bildet, und dass die Windkraftanlage eingerichtet ist, um Energie an die elektrische Energie verbrauchende Vorrichtung (110) zu liefern.

13. Elektrisches Stromnetz, **dadurch gekennzeichnet, dass** das Stromnetz an eine Windkraftanlage nach einem der Ansprüche 1 bis 9 angeschlossen ist.

14. Verwendung einer Windkraftanlage nach einem der Ansprüche 1 bis 9 zum Liefern von Energie an ein elektrisches Stromnetz.

## Revendications

1. Unité éolienne comportant un arbre de turbine vertical (6, 106) qui est installé radialement dans des paliers sur un mât de support (2, 102), ladite installation à paliers comprenant au moins un dispositif de support (13, 113) comprenant respectivement au moins trois composants de support (15) répartis dans la direction circonférentielle avec des intervalles entre les composants de support (15) dans la direction circonférentielle, l'étendue totale desdits intervalles dans la direction circonférentielle étant supérieure à la moitié de la circonférence, et lesdits composants de support (15) étant en appui contre l'arbre de turbine (6, 106) et étant raccordés au mât de support (2, 102), **caractérisée en ce que** chaque composant de support (15) comprend deux corps formant galets (16) disposés sur un élément porteur (17), ledit élément porteur pouvant être pivoté autour d'un arbre vertical (18) entre les deux corps formant galets (16).

2. Unité éolienne selon la revendication 1, **caractérisée en ce que** chaque composant de support (15) comprend au moins un corps formant galet (16) disposé de façon à être en appui contre l'arbre de turbine (6, 106).

3. Unité éolienne selon la revendication 1 ou 2, **caractérisée en ce que** chaque composant de support (15) est pressé de manière élastique contre l'arbre de turbine (6, 106).

4. Unité éolienne selon la revendication 3, **caractérisée en ce qu'**un ressort à lame (20) est disposé entre le composant de support (15) et le mât porteur (2, 102).

5. Unité éolienne selon la revendication 3 ou 4, **caractérisée en ce qu'**une rondelle de Belleville (21, 21b) est disposée entre les composants de support (15) et le mât porteur (2, 102).

6. Unité éolienne selon l'une quelconque des revendications 2 à 4, **caractérisée en ce que** chaque corps formant galet (16) comporte une surface de roulement composée d'un matériau qui est plus souple que le reste du corps formant galet (16).

7. Unité éolienne selon l'une quelconque des revendications 1 à 6, **caractérisée en ce que** l'installation à paliers comprend deux dispositifs de support (13, 113) séparés axialement.

8. Unité éolienne selon l'une quelconque des revendications 1 à 7, **caractérisée en ce qu'**au moins un des dispositifs de support (13, 113) est conçu de façon à être apte à porter des forces axiales.

9. Unité éolienne selon l'une quelconque des revendications 1 à 8, **caractérisée en ce que** le mât de support (2) comporte des surfaces de support orientées radialement vers l'intérieur avec lesquelles chaque dispositif de support (13) est raccordé, et ladite unité éolienne comprend une génératrice (3) disposée au niveau de l'extrémité inférieure du mât de support (2) et un arbre d'unité (4) qui solidarise en rotation l'arbre de turbine (6) avec la génératrice (3).

10. Unité éolienne selon l'une quelconque des revendications 1 à 8, **caractérisée en ce que** le mât de support (2, 102) comporte des surfaces de support orientées radialement vers l'extérieur avec lesquelles chaque dispositif de support (13, 113) est raccordé, **en ce que** l'arbre de turbine est creux, et **en ce que** chaque dispositif de support (13, 113) est en appui contre l'intérieur de l'arbre de turbine (6, 106).

11. Unité éolienne selon la revendication 10, **caractérisée en ce qu'**une génératrice (103) est disposée à l'intérieur de l'arbre de turbine (106) avec le rotor (107) fixé à l'intérieur de l'arbre de turbine (106) et le stator (108) fixé au mât de support (102).

12. Dispositif consommateur d'énergie électrique (110) porté par un mât de support (102) **caractérisé en ce que** le mât de support (102) constitue le mât de support d'une unité éolienne selon la revendication 11, et **en ce que** l'unité éolienne est conçue pour délivrer de l'énergie au dispositif consommateur d'énergie électrique (110) .

13. Réseau électrique **caractérisé en ce que** le réseau électrique est relié à une unité éolienne selon l'une quelconque des revendications 1 à 9.

14. Utilisation d'une unité éolienne selon l'une quelconque des revendications 1 à 9 pour délivrer de l'énergie à un réseau électrique.
